# DEMANDE DE BREVET EUROPEEN

(11) **EP 2 208 653 A1**
(43) Date de publication de la demande: **21.07.2010**
(21) Numéro de dépôt: 10150875.2
(22) Date de dépôt: 15.01.2010
(51) Int. Cl.: B60T 13/57, B60T 15/42, B60T 17/18

(54) **Dispositif à vanne trois voies pour servofrein de véhicule muni d'un conduit d'air**

(30) Priorité: 15.01.2009 FR 0900177
(71) Demandeur: Robert Bosch GmbH, 70442 Stuttgart (DE)
(72) Inventeur: Anderson, Chris, 75002 Paris (FR); Cagnac, Bastien, 60660 Cramoisy (FR); Sprocq, Raynald, 77450 Esbly (FR)
(74) Mandataire: Hurwic, Aleksander Wiktor

(57) **Abrégé**

Le dispositif (400) formant vanne à trois voies pour la commande d'un servofrein de véhicule, comprend :
- un conduit (496) dit de travail ;
- un conduit (494) dit de vide ; et
- un premier conduit (492) dit atmosphérique,

le dispositif étant apte à mettre le conduit de travail en communication au choix avec le conduit de vide et avec le premier conduit atmosphérique.

Il comprend au moins un deuxième conduit atmosphérique (490), le dispositif étant apte à mettre le conduit de travail (496) en communication avec le deuxième conduit atmosphérique (490) avant de le mettre en communication avec le premier conduit atmosphérique (492).

## Description

L'invention concerne les systèmes de freinage à servofrein et simulateur à vanne trois voies, pour véhicule automobile.

On connaît par exemple du document FR-2 895 958 un tel dispositif qui comprend :
- un dispositif de commande servant au conducteur du véhicule à transmettre une commande de freinage au moyen de la pédale de frein ;
- un simulateur à vanne trois voies fournissant une force de réaction au conducteur pour que ce dernier ait une sensation satisfaisante à la pédale lors de l'envoi de la commande ;
- un servofrein commandé par la vanne trois voies ; et
- un maître cylindre dont l'actionnement est effectué avec l'assistance du servofrein.

Au repos, l'une des chambres du servofrein, dite chambre à vide, est reliée à une source de vide et l'autre chambre, dite chambre de travail, séparée de la première par une membrane mobile, est en communication avec la chambre à vide par l'intermédiaire du simulateur formant la vanne trois voies. Lorsque le conducteur commande le freinage, le simulateur interrompt la communication entre les deux chambres et provoque un afflux d'air à la pression atmosphérique dans la chambre de travail. La pression dans cette dernière dépasse donc la pression dans la chambre à vide, ce qui déplace la membrane du servofrein et produit la mise en pression du liquide de freinage par le maître cylindre. Un tel fonctionnement est aujourd'hui classique.

Cependant, lors du début de la mise en communication de la chambre de travail avec l'air atmosphérique, on constate que l'afflux d'air peut générer des perturbations parasites perçues par le conducteur au niveau de la pédale de frein.

Un but de l'invention est de pallier cet inconvénient.

A cet effet, on prévoit selon l'invention un dispositif formant vanne à trois voies pour la commande d'un servofrein de véhicule, le dispositif comprenant :
- un conduit dit de travail ;
- un conduit dit de vide ; et
- un premier conduit dit atmosphérique,
le dispositif étant apte à mettre le conduit de travail en communication au choix avec le conduit de vide et avec le premier conduit atmosphérique,
le dispositif comprenant au moins un deuxième conduit atmosphérique, le dispositif étant apte à mettre le conduit de travail en communication avec le deuxième conduit atmosphérique avant de le mettre en communication avec le premier conduit atmosphérique.

Ainsi, on fait en sorte que l'arrivée d'air atmosphérique dans la chambre de travail se fasse d'abord avec un premier débit, puis avec un deuxième débit. On peut ainsi choisir, pendant une première période, un débit qui réduit les risques de génération de perturbations. Indépendamment de cela, pendant la deuxième période, une fois que le risque de perturbation est écarté, on peut prévoir un autre débit, par exemple un débit plus élevé. Ainsi, on aménage un premier débit pendant une période où des perturbations risquent d'apparaître et on passe à un second débit lorsque le risque de perturbation est écarté. Ce meilleur contrôle du débit d'air au début de l'arrivée d'air dans la chambre de travail évite les perturbations parasites.

Avantageusement, le deuxième conduit atmosphérique présente une section transversale plus petite qu'une section transversale du premier conduit atmosphérique.

Ainsi, le débit d'air durant la première période est inférieur au débit d'air durant la deuxième période afin de réduire les risques de perturbation.

Avantageusement, le dispositif est apte à mettre le conduit de travail en communication simultanément avec les premier et deuxième conduits atmosphériques.

Pendant la deuxième période, on utilise donc les deux conduits pour permettre une arrivée d'air rapide dans la chambre de travail.

De préférence, le dispositif présente une enceinte par laquelle il est apte à faire communiquer le premier conduit atmosphérique avec le conduit de travail et à interrompre cette communication, le dispositif étant agencé de sorte que le deuxième conduit atmosphérique communique en permanence avec l'enceinte.

Ainsi, il suffit de mettre l'enceinte en communication avec le conduit de travail pour provoquer une première arrivée d'air. Des moyens propres au deuxième conduit permettent ensuite d'autoriser un débit d'air à travers ce dernier.

De préférence, le dispositif comprend :
- un piston de commande; et
- un piston de réaction distant du piston de commande lorsque le simulateur est au repos,
le dispositif étant agencé de sorte que le piston de commande, sous l'effet d'une commande transmise depuis l'extérieur du simulateur, peut être déplacé sur une course prédéterminée en direction du piston de réaction sans transmettre de sollicitation à ce dernier.

Ainsi, en cas de défaillance de la source de vide, tant qu'il n'y a pas d'interaction entre les deux pistons dans le simulateur, notamment au début de la course du piston de commande, le conducteur ne sollicite pas le piston de réaction et ne consomme donc pas inutilement une partie de son énergie. Il peut donc ensuite consacrer davantage de cette énergie à l'actionnement du système de freinage.

De préférence, le simulateur sera agencé de sorte qu'un jeu de découplage entre la tige du dispositif de commande et le piston du maître cylindre, jeu existant lorsque le système est au repos, est annulé (de sorte que ceux-ci sont en contact) avant l'achèvement de la course prédéterminée. Le système n'aura donc pas consommé une part significative de l'énergie du conducteur avant que ce dernier ne commence à mettre en pression le circuit de liquide de freinage.

De préférence, le dispositif comprend :
- un carter présentant une enceinte avec laquelle chacun des trois conduits est apte à communiquer directement ;
- un piston de commande;
- un coulisseau s'étendant dans l'enceinte;
- un ressort en appui contre le piston et le coulisseau, et
- un conduit dit de maître cylindre, agencé pour transmettre une pression de fluide sur le coulisseau, indépendamment du piston, de sorte que cette pression sollicite le coulisseau en direction opposée au piston.

Ainsi, durant la phase de saut, le piston de commande sollicite le coulisseau qui se trouve par ailleurs entraîné dans le même sens par la pression qui croît dans le circuit de freinage. Le conducteur, après la fourniture de l'effort d'attaque, n'a donc plus à fournir un effort supplémentaire pour que la pression dans le circuit de freinage continue à augmenter. Il lui suffit de déplacer davantage l'organe de freinage, par exemple la pédale de frein, pour que la pression dans le circuit de freinage augmente. Il commande donc le freinage en modifiant la course de la pédale, mais pas l'effort qu'il exerce dessus. Le freinage se fait ainsi, pendant la phase de saut, à effort constant. L'intensité du freinage obtenu est fonction de la course de la pédale mais plus de l'effort exercé sur elle. L'énergie du conducteur se trouve donc en grande partie préservée. Le conducteur peut donc mobiliser une plus grande part d'énergie en urgence si un freinage de grande intensité est rendu nécessaire par les circonstances.

On prévoit également selon l'invention un système de freinage comprenant un dispositif selon l'invention et un servofrein.

D'autres caractéristiques et avantages de l'invention apparaîtront dans la description suivante d'un mode de réalisation donné à titre d'exemple non limitatif en référence aux dessins annexés sur lesquels :
- la figure 1 est une vue d'un système de freinage selon un mode de réalisation de l'invention ;
- la figure 2 est une vue en coupe axiale à plus grande échelle du simulateur du système de la figure 1 ;
- les figures 3 à 19 sont des vues analogues à la figure 2 illustrant différents stades du fonctionnement du simulateur ; et
- la figure 20 est une courbe illustrant la pression dans les circuits de frein en fonction de la force d'entrée appliquée au simulateur.

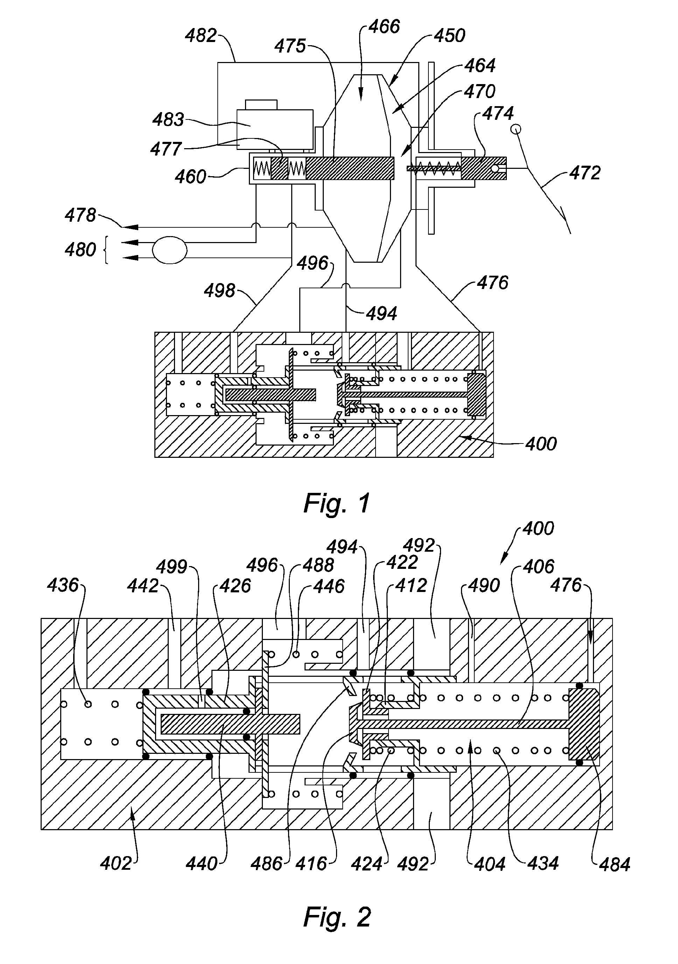

Nous allons décrire en référence à la figure 1 un mode de réalisation du simulateur de l'invention. Ce simulateur fait partie d'un système de freinage de véhicule automobile qui comprend:
- un dispositif de commande du freinage apte à recevoir une commande de freinage du conducteur du véhicule;
- un simulateur recevant la commande du dispositif de commande, comprenant une vanne à trois voies et apte à générer une sensation perçue à la pédale par le conducteur;
- un servomoteur d'assistance au freinage commandé par la vanne à trois voies et actionnant un maître-cylindre contrôlant la pression de liquide de frein dans les circuits de freinage du véhicule s'étendant jusqu'à des organes de freins situés près des roues.

Un tel système est connu en lui-même, par exemple du document FR-2 895 958.

Sur les figures, par convention, la gauche correspond à l'avant tandis que la droite correspond à l'arrière.

Sauf indication contraire, toutes les pièces sont coaxiales d'axe 108 et à symétrie de révolution.

On a illustré à la figure 1 une vue d'ensemble du système dans lequel s'intègre le simulateur 400. Le système comprend un dispositif de commande hydraulique du freinage 470 intégré coaxialement au servofrein 450. La pédale de frein 472, ou tout organe analogue, qui sert au conducteur pour commander le freinage est reliée à une tige de commande 474 montée mobile à coulissement par rapport au carter du servofrein suivant l'axe de ce dernier. La tige pénètre à l'intérieur de la chambre de travail 464 et présente une extrémité qui se trouve au repos à distance d'une tige de poussée 475 du maître cylindre 460. Cette disposition permet, en cas de défaillance du simulateur 400 ou du servofrein 450 comme on va le voir plus bas, d'exercer une pression à partir de la tige de commande 474 directement sur la tige 475. La tige 474, commandé par la pédale de frein, est apte à mettre sous pression de fluide une chambre du dispositif de commande hydraulique qui transmet cette pression dans un conduit 476 débouchant dans le simulateur 400 en amont du piston de commande. Un conduit 482 partant d'un réservoir de liquide 483 permet d'alimenter en liquide de freinage l'intérieur du dispositif de commande 470.

Le simulateur 400 reçoit la pression ainsi injectée et permet, selon la position du piston, de commander le fonctionnement du servomoteur d'assistance au freinage comme on le verra plus bas.

Le dispositif comprend une source de dépression 478 permettant de faire le vide dans la chambre à vide 466 du servofrein. Le maître cylindre 460 comprend deux pistons 475 et 477, le premier étant assimilé à la tige 475 pour plus de simplicité. Des circuits hydrauliques de freinage 480 permettent de retransmettre la pression de freinage aux organes de frein des roues du véhicule.

Dans le présent exemple, le piston de commande 406 est logé intégralement à l'intérieur du carter 402 du simulateur 400. Il présente à son extrémité arrière un palpeur 484 qui subit à sa face arrière la pression de liquide venant du conduit 476. Le relief du piston de commande est formé par une butée 416 à l'extrémité avant du piston. Le palpeur 484 et la butée 416 sont reliés l'un à l'autre par une tige sur laquelle est enfilé le clapet 422.

Ce dernier peut venir en appui tantôt contre la butée 416 tantôt contre une collerette 412 de la douille 426, s'étendant en arrière du clapet. La douille comporte en outre un relief 486 s'étendant en regard de la face avant du clapet, du même côté par conséquent que la butée 416 et contre lequel le clapet peut également venir en appui.

Le ressort de valve 434 est en appui vers l'arrière contre le palpeur 484 et vers l'avant contre la base de la collerette 412.

Le ressort de clapet 424 prend appui vers l'arrière contre cette collerette et vers l'avant contre le clapet 422 pour solliciter ce dernier en appui sur la butée 416 au repos comme sur la figure 2.

Le ressort de saut 446 prend appui vers l'arrière contre une face du carter 402 et vers l'avant contre une rondelle mobile 488.

Cette dernière est traversée en son centre par une extrémité arrière du piston de réaction 440 qui présente un épaulement par lequel il vient en butée vers l'arrière contre une face avant de la rondelle 488. Le piston 440 présente une extrémité avant enfilée dans l'extrémité avant de la douille 426, laquelle pénètre dans une enceinte avant 105 du carter 402.

Le carter présente un premier conduit radial 490 mettant en communication l'extérieur du carter à l'air atmosphérique avec l'enceinte arrière 404 en avant du palpeur 484. Le carter présente au moins un deuxième conduit radial 492 et en l'espèce deux conduits, susceptibles chacun de déboucher aussi en avant du palpeur pour mettre l'enceinte arrière en communication avec l'air atmosphérique. Contrairement au conduit 490, les conduits 492 ne réalisent pas cette communication en permanence. Ainsi, au repos comme sur la figure 2, l'extrémité arrière de la douille 426 obture ces conduits. De plus, ces conduits présentent une section courante très supérieure à celle du conduit 490 et permet donc un débit d'air plus élevé.

Le carter présente un conduit radial 494 mettant en communication une zone médiane de l'enceinte arrière 404, occupée par le clapet 422, située entre la collerette 412 et le relief 486, avec la chambre à vide 466 du servofrein elle-même reliée à la source de vide 478.

Le carter comprend aussi un conduit radial 496 débouchant dans l'enceinte 404, entre la butée 416 et la rondelle 488, pour la mettre en communication avec la chambre de travail 464 du servofrein.

Des orifices sont également prévus dans la douille au droit du conduit 496 et au droit de la collerette 412.

Un autre conduit radial 442 du carter met en communication une enceinte interne avant de la douille dans laquelle se trouve le piston de réaction 440 avec la pression primaire régnant dans le maître cylindre. A cette fin, un orifice 499 traverse radialement la paroi de la douille.

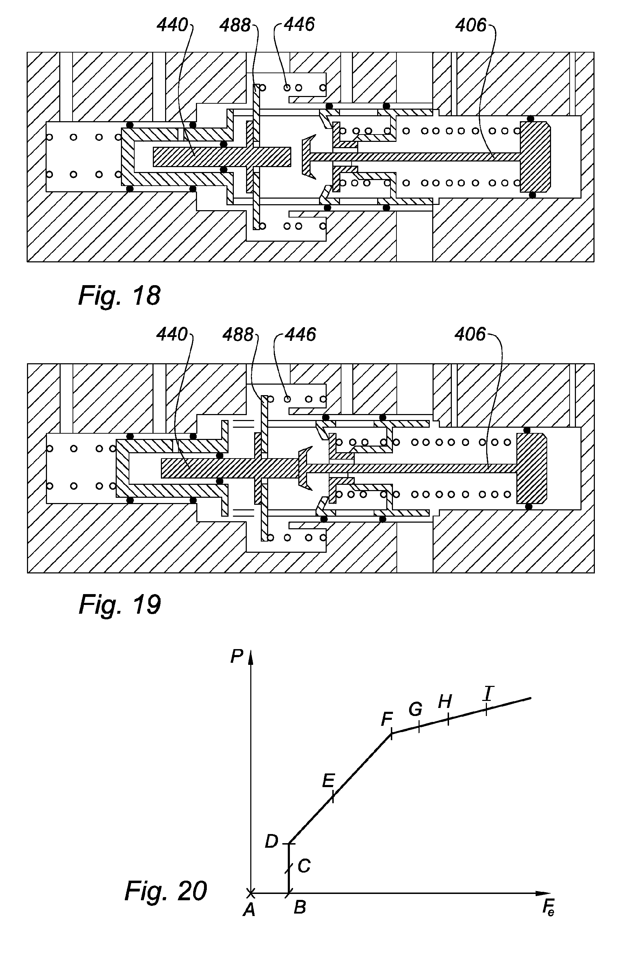

La figure 2 illustre le simulateur au repos, en l'absence donc de l'actionnement de la pédale 472. Le palpeur 484 est en butée contre l'extrémité arrière du carter. Le clapet 422 est en appui contre la butée avant 416. La rondelle 488 est en butée vers l'avant contre le carter 402. Le piston de réaction 440 est en butée vers l'arrière contre le disque. La douille est en butée vers l'arrière à la fois contre le carter à l'arrière de ce dernier, au niveau d'un épaulement situé entre les conduits 490 et 492, et contre le piston de réaction 440. Une communication est donc établie du conduit 494 à travers la douille devant le clapet, jusqu'au conduit 496. La chambre à vide et la chambre de travail sont donc à la même pression. Il n'y a pas de pression dans le maître cylindre. On se trouve au point A de la figure 20.

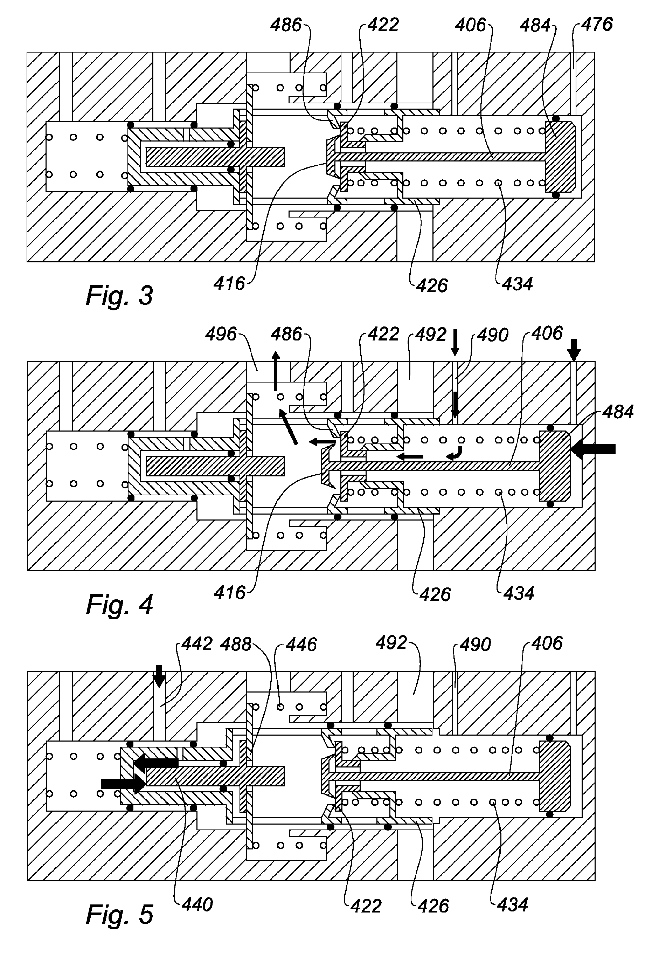

On va tout d'abord expliquer en référence aux figures 3 à 8 le fonctionnement du simulateur lorsque la commande envoyée par le conducteur est telle que le saut se produit presque complètement, puis la pression redescend, la commande étant interrompue.

En référence à la figure 3, l'envoi de la commande au moyen de la pédale 478 fait croître la pression de liquide en amont du palpeur 484, ce qui déplace le piston de commande 406 vers l'avant et place le clapet 422 en contact avec le relief 486. La chambre de travail 464 se trouve donc isolée à l'égard de la chambre à vide. On se trouve alors au point B.

A la figure 4, la poursuite du mouvement du piston de commande 406, sous l'effet de la pression qui croît en arrière du palpeur, entraîne un décollement de la butée 416 qui s'éloigne vers l'avant à l'égard du clapet. Une communication d'air s'établit alors entre l'air atmosphérique arrivant par le conduit 490 entre la tige du piston de commande et le clapet, puis entre la butée 416 et le clapet et enfin entre la butée et l'épaulement 486. L'air peut alors s'échapper jusqu'au conduit 496 et parvenir dans la chambre de travail 464. Compte tenu de la faible section du conduit 490, c'est un faible débit d'air qui passe à ce stade.

La membrane du servofrein commence donc à se déplacer lentement, ce qui augmente la pression dans le maître cylindre. Cette pression est transmise au simulateur par le conduit 442, comme illustré à la figure 5. A travers la douille 426, elle est transmise au piston de réaction 440, mais ce dernier demeure bloqué par le ressort de saut 446 qui immobilise toujours la rondelle 488. Cette pression se transmet aussi à la douille en la sollicitant vers l'avant. L'avancée de la douille permet au clapet 422 de rattraper son siège formé par la butée 416, ce qui obture la communication d'air qui venait d'être établie. De plus, la douille a encore trop peu avancé pour libérer les conduits 492.

Le conducteur continuant à solliciter le piston de commande, le même phénomène se poursuit. Le clapet se déplace ainsi avec les autres pièces en recherchant son équilibre. A ce stade, on se trouve donc à un point situé entre les points B et C sur la figure 5, le saut ayant été amorcé. Le déplacement du piston de commande 406, de la douille 426, du clapet 422 et du ressort de valve 434 se fait sans que ce dernier ne soit davantage comprimé comme déjà expliqué. Il a donc ici encore son caractère flottant.

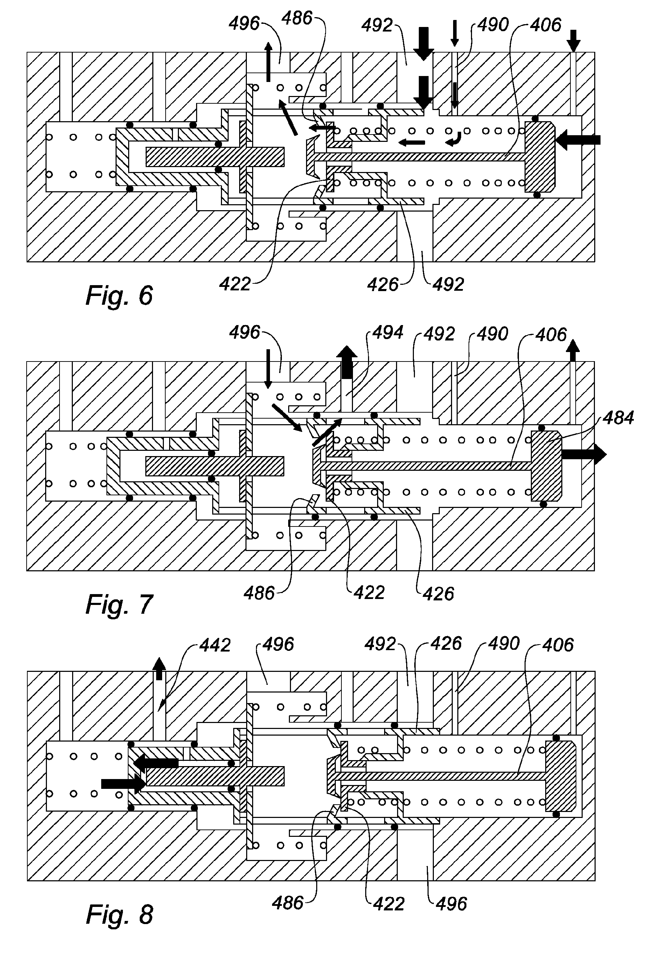

A la figure 6, la douille a tellement avancé qu'elle a mis en communication le conduit 492 avec le conduit 496. Le débit d'air peut donc maintenant être plus important en direction de la chambre de travail. De plus, l'air passe encore à travers le conduit 490 ouvert en premier. La membrane se déplace plus rapidement et augmente plus vite la pression dans le maître cylindre, ce qui accélère le déplacement de ces pièces.

On suppose toutefois ici que le conducteur interrompt la commande de freinage de sorte que le saut n'a pas lieu complètement. Ainsi, on n'atteint pas le point D. L'interruption de cette commande a été illustrée sur la figure 7. La baisse de la pression en amont du palpeur 484 entraîne le recul du piston de commande 406 qui emmène le clapet 422. Le contact entre la butée 416 et le clapet interrompt la communication d'air entre le conduit 496 et l'air atmosphérique des conduits 492 et 490.

De plus, le clapet s'éloigne du relief 486. L'espace ainsi ménagé entre eux met en communication le conduit 496 avec le conduit 494. En d'autres termes, la chambre de travail est mise en communication d'air avec la chambre à vide et est donc mise à la même pression. Elle se vide de son air et la pression dans le maître cylindre décroît, ce qui entraîne le recul progressif de la douille avec les autres pièces. Ce recul se fait ici encore sans que le ressort de valve 434 ne voie sa longueur modifiée de sorte que le conducteur ressent un effort constant à la pédale. De même que le déplacement de l'équipage vers l'avant lors de l'action de freinage, le déplacement vers l'arrière de l'équipage une fois le freinage interrompu se fait pendant que le clapet recherche son équilibre, le clapet étant en appui tantôt sur la butée 416 tantôt sur le relief 486.

A la figure 8, la douille revient finalement en appui contre l'épaulement, marquant sa fin de course vers l'arrière et le retour au point B avant le retour au point A.

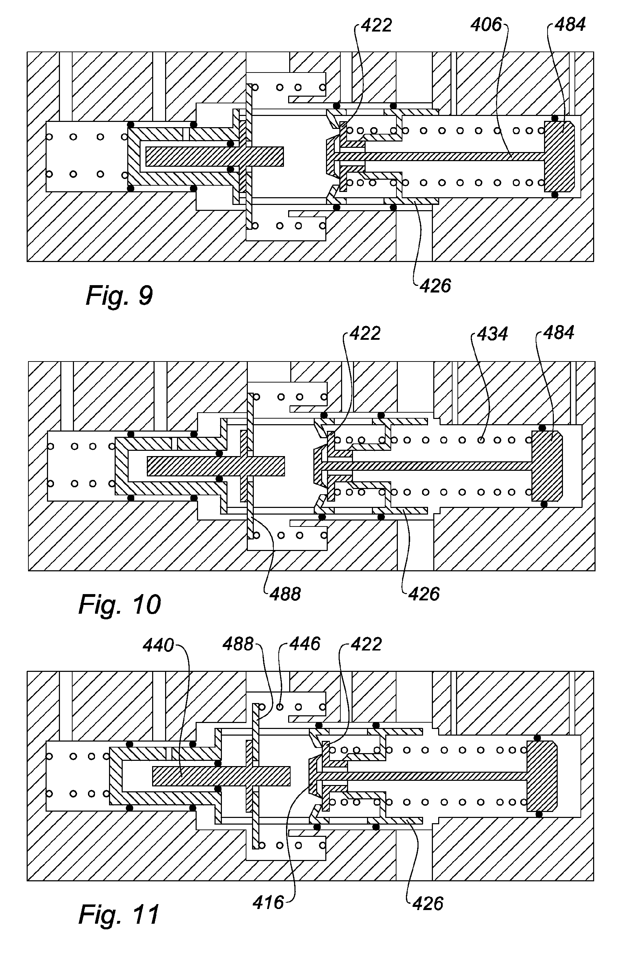

Un deuxième mode de fonctionnement du simulateur va être maintenant décrit en référence aux figures 9 à 15. Il s'agit cette fois d'un freinage complet, à savoir d'un freinage qui est commandé jusqu'à atteindre au moins la phase d'assistance proportionnelle.

A la figure 9, au point B, on suppose ici que le conducteur vient de commencer la commande de freinage, le palpeur 484 étant légèrement distant de la face arrière du carter.

A la figure 10, le piston de commande 406, la douille 426, le clapet 422 et le ressort de valve 434 se sont déplacés vers la gauche durant une partie du saut comme expliqué plus haut. On dépasse toutefois maintenant le point atteint lors de la description précédente.

Ainsi, à la figure 11, la pression dans le maître cylindre a tellement augmenté que la sollicitation qu'elle exerce sur le piston de réaction 440 lui permet maintenant de vaincre la force du ressort de saut 446 qui maintenait pendant le saut la rondelle 488 en appui vers l'avant contre le carter. Ainsi, à ce stade, non seulement la douille 426 se déplace vers la gauche mais le piston de réaction 440 se déplace vers la droite en direction de la butée 416, emmenant le disque 488.

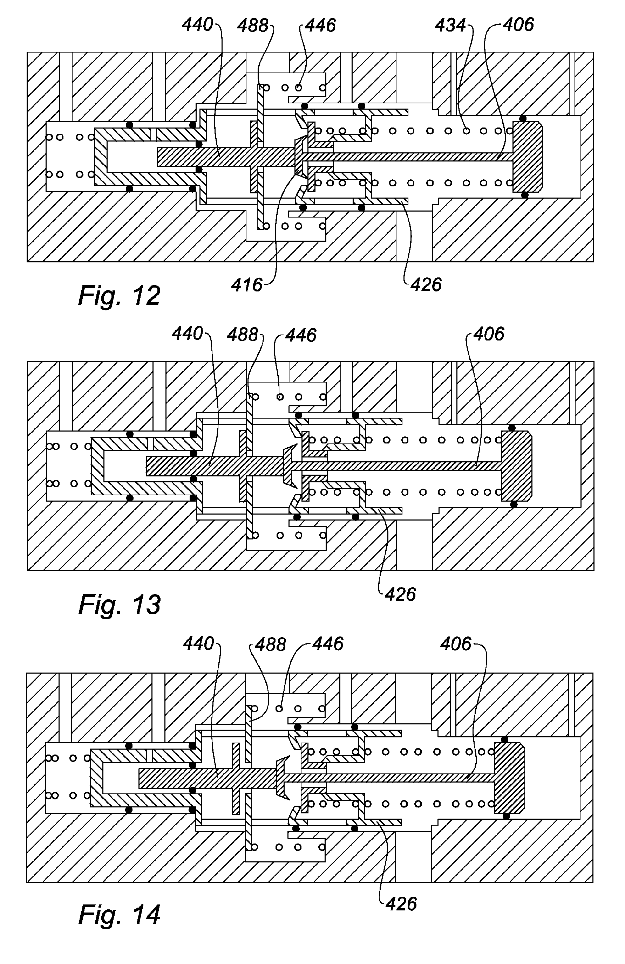

Ce mouvement se poursuit jusqu'au stade illustré à la figure 12 dans lequel l'extrémité arrière du piston de réaction 440 vient en contact avec la butée 416 du piston de commande 406. Ce stade marque la fin du saut au point D sur la figure 20 et le début de l'assistance proportionnelle. Dorénavant, la poursuite de l'actionnement de la pédale de frein par le conducteur va lui permettre de ressentir non seulement l'effort constant fourni par le ressort de valve 434 mais aussi la pression qui s'accroît dans le maître cylindre. Il va donc ressentir un effort environ proportionnel à celui de la pression dans le maître cylindre.

La douille 426 poursuit son mouvement vers l'avant jusqu'à venir en butée contre le carter, comme illustré à la figure 13. On choisit ce point de fin de course pour qu'il corresponde à la saturation du servofrein, c'est-à-dire au point F sur la figure 20. Cela signifie que la suite du freinage se fera sous l'effet du seul effort fourni par le conducteur, le servofrein ne pouvant plus fournir d'assistance.

Peu après, la suite du mouvement vers la gauche du piston de commande 406 qui pousse maintenant directement le piston de réaction 440 provoque le retour en butée vers l'avant de la rondelle 488. L'action du conducteur contre la pression du maître cylindre est aidée en cela par le ressort de saut 446 qui sollicite le piston de réaction 440 vers l'avant. On est au point au point G sur la figure 20.

La suite du mouvement se fait sans cette aide. Comme on le voit sur la figure 14, le piston de réaction 440 se sépare en effet de la rondelle 488 dans son déplacement vers l'avant. On est au point au point H sur la figure 20.

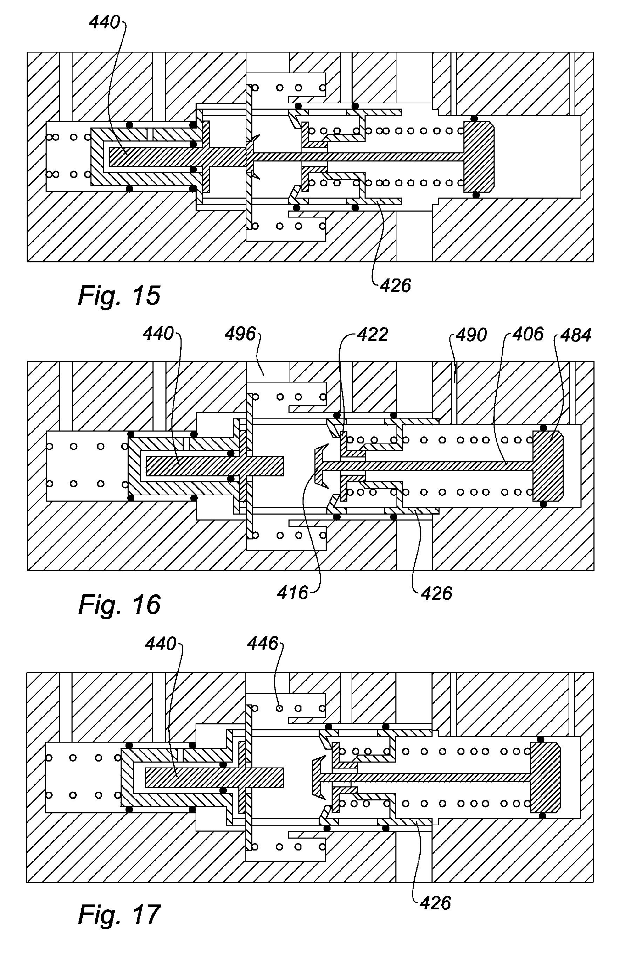

A la figure 15, le piston de réaction 440 parvient finalement en butée lui-même vers l'avant contre la douille 426, ce qui marque la course maximale des pièces du simulateur vers l'avant. On se trouve alors au point 1 sur la figure 20.

On va enfin décrire en référence aux figures 16 à 19 une circonstance de fonctionnement qui constitue un mode dégradé. On suppose en effet que la source de vide, défaillante, ne fournit plus de vide. La pression atmosphérique règne donc dans les deux chambres du servofrein qui ne peut pas fournir d'assistance.

Ainsi, on suppose à la figure 16 que le conducteur actionne le piston de commande 406 pour commander le freinage. L'augmentation de la pression à droite du palpeur 484 entraîne le décollement de la butée 416 à l'égard du clapet 422. Cela met en communication les conduits 496 et 490 mais n'entraîne aucun effet au niveau du servofrein et de la pression dans le maître cylindre.

Le conducteur actionne la pédale jusqu'à mettre en contact direct la tige 474 du dispositif de commande avec le piston 475 du maître cylindre. Il rattrape donc le jeu de découplage initial entre ces pièces.

Ensuite, le conducteur exerce donc directement une pression sur le maître cylindre, ce qui augmente la pression dans le liquide. Cette augmentation de pression se transmet à l'avant de la douille 426, à l'intérieur de cette dernière jusqu'au piston de réaction 440. Le ressort de saut 446 empêche le déplacement de ce dernier mais l'augmentation de la pression provoque l'avancée de la douille comme illustré à la figure 17.

Jusqu'à ce stade, l'avancée du piston de réaction n'a pas compressé d'autre ressort que le ressort 434 qui est de faible raideur. Le conducteur a donc préservé une fraction de son énergie. L'action du conducteur est donc plus efficace en cas de perte de vide.

A la figure 18, la pression dans le maître cylindre a continué à croître jusqu'à vaincre la résistance du ressort de saut 446, permettant ainsi de déplacer le piston de réaction 440 et la rondelle 488 vers la droite.

Finalement, un contact direct s'établit à la figure 19 entre le piston de commande 406 et le piston de réaction 440. A partir de ce stade, au cours de la suite de la commande, le conducteur s'oppose aussi au niveau du simulateur à la pression régnant dans le maître cylindre.

Bien entendu, on pourra apporter à l'invention de nombreuses modifications.

On pourra prévoir que le conduit atmosphérique 490 a même diamètre que le ou chaque conduit atmosphérique 492, son diamètre suffisant à éviter les perturbations dues au régime transitoire. On pourra prévoir de fermer le conduit 490 lorsqu'on ouvre le conduit 492.

## Revendications

1. Simulateur (400) commandé depuis l'extérieur formant vanne à trois voies pour la commande d'un servofrein (450) de véhicule, le dispositif comprenant :
- un conduit (496) dit de travail ;
- un conduit (494) dit de vide ; et
- un premier conduit (492) dit atmosphérique,
le dispositif étant apte à mettre le conduit de travail en communication au choix avec le conduit de vide et avec le premier conduit atmosphérique,
**caractérisé en ce qu'**il comprend au moins un deuxième conduit atmosphérique (490), le dispositif étant apte à mettre le conduit de travail (496) en communication avec le deuxième conduit atmosphérique (490) avant de le mettre en communication avec le premier conduit atmosphérique (492).

2. Dispositif selon la revendication précédente, dans lequel le deuxième conduit atmosphérique (490) présente une section transversale plus petite qu'une section transversale du premier conduit atmosphérique (492).

3. Dispositif selon l'une quelconque des revendications précédentes, apte à mettre le conduit de travail (496) en communication simultanément avec les premier et deuxième conduits atmosphériques (490, 492).

4. Dispositif selon l'une quelconque des revendications précédentes, qui présente une enceinte (404) par laquelle il est apte à faire communiquer le premier conduit atmosphérique (492) avec le conduit de travail (496) et à interrompre cette communication, le dispositif étant agencé de sorte que le deuxième conduit atmosphérique (490) communique en permanence avec l'enceinte.

5. Dispositif selon l'une quelconque des revendications précédentes, qui comprend :
- un piston de commande (406) ; et
- un piston de réaction (440) distant du piston de commande lorsque le simulateur est au repos,
le dispositif étant agencé de sorte que le piston de commande, sous l'effet d'une commande transmise depuis l'extérieur du simulateur, peut être déplacé sur une course prédéterminée en direction du piston de réaction sans transmettre de sollicitation à ce dernier.

6. Dispositif selon l'une quelconque des revendications précédentes, qui comprend :
- un carter présentant une enceinte (404) avec laquelle chacun des trois conduits est apte à communiquer directement ;
- un piston de commande (406) ;
- un coulisseau s'étendant dans l'enceinte (426) ;
- un ressort (434) en appui contre le piston et le coulisseau,
- un conduit (442) dit de maître cylindre, agencé pour transmettre une pression de fluide sur le coulisseau, indépendamment du piston, de sorte que cette pression sollicite le coulisseau en direction opposée au piston.

7. Système de freinage comprenant un dispositif (400) selon l'une quelconque des revendications précédentes et un servofrein (450).
